# EUROPEAN PATENT APPLICATION

(11) **EP 2 365 430 A2**
(43) Date of publication of application: **14.09.2011**
(21) Application number: 11250184.6
(22) Date of filing: 17.02.2011
(51) Int. Cl.: G06F 3/12

(54) **Printing internet inaccessible web content via remote printing service**

(30) Priority: 09.03.2010 US 720501
(71) Applicant: Ricoh Company, Ltd., Tokyo 143-8555 (JP)
(72) Inventor: Wang, Yao-Tian, Cupertino, California 95014 (US); Mohammad, Soiba, Cupertino, California 95014 (US); Sekine, Hitoshi, Tokyo 143-8555 (JP)
(74) Representative: White, Duncan Rohan

(57) **Abstract**

Systems and methods presented herein provide for printing, via a remote printing service, Internet content retrieved by a client device. The retrieved Internet content is Internet inaccessible to the remote printing service (106) as it is viewable within a private network (e.g., an Intranet). In one embodiment, a method includes retrieving the webpage from a data network with a client device (102), transferring a request from the client device (102) to the remote printing service (106) to render the webpage for printing, and receiving a response from the remote printing service (106) indicating that the webpage is inaccessible. The method also includes storing data of the webpage in the client device (102) and transferring the stored webpage data from the client device (102) to the remote printing service (106) for rendering and printing.

## Description

### 1. Field of the Invention

The invention relates generally to providing remote printing services to a client device.

### 2. Discussion of Related Art

In a printing environment, various print options exist when printing a document on a printing device. For example, a user may desire to print a document with duplex printing, stapling, sorting, etc. After the user selects the various print job options, a print is generated for the document to be printed. The generated print job is subsequently submitted to a printing device for printing on some form of printable media.

Typically, the available print options for a specific printing device are established when a printing device is installed on a client device. For example, when a print driver is installed on a computer, various print options for the printing device may be specified by a user, such as what paper trays are available, the size of the paper in each tray, the amount of memory within the printing device, etc. A print capabilities file configured with the printing devices allows the client device to consistently identify the print capabilities of a specific printing device. When a print job for the printing device is generated using the print driver and the print capabilities file, the various print options for the print job are converted into device specific commands for the printing device. The device specific commands are generally unique to a particular vender or model of the printing device. Various web print services, however, exist which allow client devices to transfer the process of print job generation to a server operating the web print services. Such services may be utilized, for example, when the client device either lacks the rendering capability for the print job or is simply too limited in performance for rendering the print job on the client device in a reasonable amount of time. In such cases, the server executing a web print service renders the print job for the client. In doing so, the client device connects to the server on one data network (often referred to as a "cloud") and sends a document to the server, specifying the printer model to be used. The server then generates a Page Descriptor Language (PDL) rendition of the document and sends the rendered document to a printer in another data network for printing. However, such printing services are generally not available to the printing of webpages being viewed on certain client devices. For example, a mobile client device may view a webpage within a certain data network that is inaccessible to the rendering server because the webpage content may reside within an intranet web server or other secure network (e.g., a secure website on an Internet web server). Another situation might have the printing being unable to access the webpage because it requires a login of some sort (e.g., a username and a password known only to the user).

### SUMMARY

The systems and methods presented herein provide remote printing services of web content to a client device when the web content is not accessible to the remote printing service via the Internet. For example, a remote printing service used for rendering web content downloaded via the client device may not be accessible via the Internet. Instead, the web content is only available to users within the network, such as the case of an Intranet. Similarly, the printers of this private network are also not accessible to users outside the network. Systems and methods presented herein overcome such by directing the client device to store the webpage data (e.g., via flash drives, hard drives, optical drives, computer memory, etc.). The client device then transfers the stored webpage data to the remote printing service for rendering via a print driver of a desired/selected printing device. As used herein, storage of the webpage data may include streaming portions of the webpage data from the client device. For example, if the web content is not accessible to the remote printing service, the client device may stream portions of the web content to the remote printing service just as the web content may be streamed to the client device from a web server.

Once rendered, the remote printing service transfers the rendered webpage to the printing device for printing via the client device. In doing so, the remote printing service may transfer the rendered webpage to the client device for preview prior to printing. For example, a user of the client device may wish to preview the rendered webpage prior to printing to determine if it is sufficient for the user's needs. If printing is still desired, the client device may transfer the rendered webpage to the printing device for printing. If not, the rendered webpage may be simply deleted from the client device's memory. The remote printing service may, alternatively or additionally, transfer the rendered webpage directly to the printing device for printing. The client device may also be configured to automatically store all downloaded Web content regardless of whether it is accessible to the remote printing service. For example, when Web content is accessible to the remote printing service via the Internet, the client device may issue a printing request of the webpage that includes a uniform resource locator of that webpage. The remote printing service in turn loads the webpage via the URL to render a copy of the webpage for printing. While this feature may be continually enabled, the user of the client device may desire to simply treat all webpage content as inaccessible to the remote printing service such that all webpage content is stored with the client device and transferred to the remote printing service when printing is desired. In one embodiment, multiple webpages may be combined into a single file (e.g., bundled using "zip" mechanisms or the like). In this case, the client device may transfer the combined file of webpages to the remote printing service where they may be unbundled and individually rendered according to the desired print driver(s).

In one embodiment, a method of printing a webpage with a remote printing service is provided. The webpage is not accessible to the remote printing service via the Internet. The webpage, however, is accessible to the client device. The method includes retrieving the webpage from a data network with a client device, transferring a request from the client device to the remote printing service to render the webpage for printing, and receiving a response from the remote printing service indicating that the webpage is inaccessible. The method also includes storing data of the webpage in the client device and transferring the stored webpage data from the client device to the remote printing service for rendering and printing.

The method may also include storing data of a plurality of webpages in the client device, whether they are Internet accessible to the remote printing service or not. For example, the client device may be configured to automatically store all webpages regardless of whether they are accessible to the remote printing service. In one embodiment, the stored webpages may be bundled/compressed into a single file that is transferred to the remote printing service. There, the remote printing service unbundles and/or extracts the individual webpages from the single file for rendering. The method may also include receiving a preview of the rendered webpage from the remote printing service and previewing the rendered webpage with the client device (e.g., an image of the webpage as it would be printed on a printer).

Where webpages are accessible to the remote printing service via the Internet, the method may further include transferring a request from the client device to the remote printing service to render another webpage for printing, In such case, the request includes a uniform resource locator (URL) of the webpage so that the remote printing service may retrieve the other webpage. The method may also include determining a print driver to render the webpage data responsive to the request to render the webpage for printing. For example, once a remote printing request is made, the remote printing service may locate the appropriate print driver and render the webpage for printing. If the remote printing service unable to locate the appropriate print driver within a list of print drivers maintained within the remote printing service, the remote printing service may locate the appropriate print driver through the Internet.

In another embodiment, a remote printing system includes a plurality of printing devices operable within a first data network, a remote printing service operable within a second data network to render print jobs for the printing devices, and a print module configured with a client device. The print module is operable to configure a webpage for rendering via the remote printing service. The webpage is inaccessible to the remote printing service via the Internet. The print module is further operable to transfer a request from the client device to the remote printing service to render the webpage for printing, receive a response from the remote printing service indicating that the webpage is inaccessible, store data of the webpage in the client device, and transfer the stored webpage data from the client device to the remote printing service for rendering.

In another embodiment, a print module is operable within a client device. The print module includes software instructions that, when executed by a processor of the client device, direct the processor to transfer a request from the client device to a remote printing service to render a webpage retrieved by the client device for printing. The software instructions also direct the processor to receive a response from the remote printing service indicating that the webpage is inaccessible. In this case, the software instructions direct the processor to store data of the webpage in the client device and transfer the stored webpage data from the client device to the remote printing service for rendering and printing.

### BRIEF DESCRIPTION OF THE DRAWINGS

The same reference number represents the same element or same type of element on all drawings.
FIG. 1 is a block diagram of an exemplary printing system with the remote rendering capabilities.
FIG. 2 is a block diagram of the exemplary printing system configured for remote rendering of Internet inaccessible web content.
FIG. 3 is a flow chart illustrating an exemplary process of remote rendering Internet inaccessible web content.
FIG. 4 is a block diagram of an exemplary graphical user interface for implementing the remote rendering of Internet inaccessible web content.
FIG. 5 is an exemplary communication processing flow for rendering Internet accessible web content.
FIG. 6 is an exemplary communication processing flow for rendering Internet inaccessible web content.
FIG. 7 is a block diagram of an exemplary computing device for executing programmed instructions to carry out the remote rendering of Internet inaccessible web content.

### DETAILED DESCRIPTION OF THE DRAWINGS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention and are to be construed as being without limitation to such specifically recited examples and conditions. As a result, the invention is not limited to the specific embodiments or examples described below, but by the claims and their equivalents.

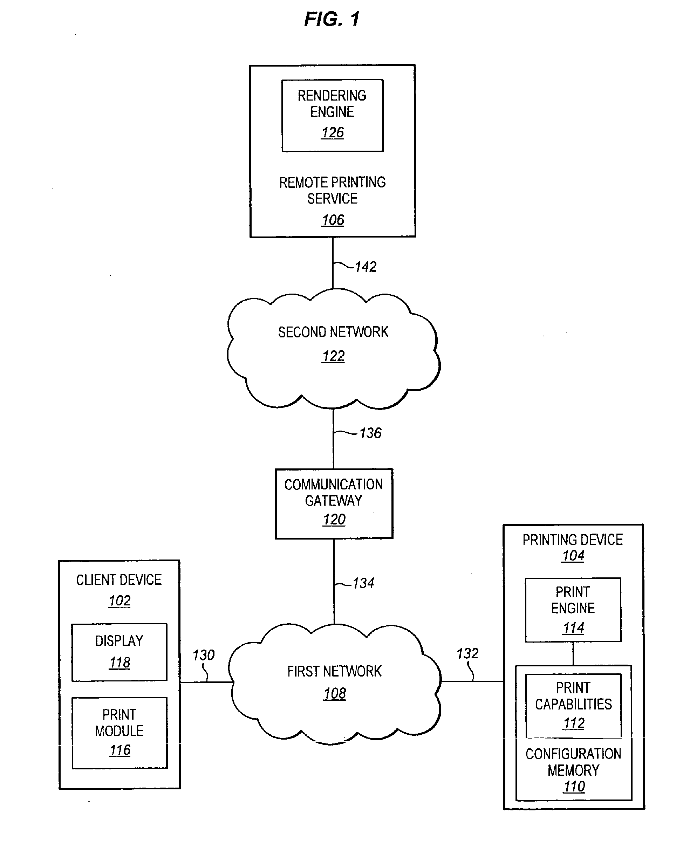

FIG. 1 is a block diagram of an exemplary printing system 100 for remotely rendering print jobs via a remote printing service 106. The printing system 100 includes a client device 102 and a printing device 104. The printing system 100 may additionally include a communication gateway 120. Although the printing system 100 has been illustrated using specific elements, one skilled in the art will recognize that the printing system 100 may include more or fewer elements as a matter of design choice. Additionally, one skilled in the art will recognize that the printing system 100 may include any number of circuits, programmable logic devices, processors, memory devices, printing devices, client devices, and Internet print servers operable to perform the functionality disclosed herein.

In the printing system 100, the client device 102 is operable to obtain the print capabilities 112 from the printing device 104 and provide the print capabilities 112 to the remote printing service 106. In this regard, the client device 102 may be configured with a print module 116 that is operable to assist the client device 102 with the remote rendering and printing capabilities described herein. The print module 116 may be configured in the client device 102 as software, hardware, firmware, or combinations thereof. For example, the print module 116 may comprise software instructions that, when executed by a processor of the client device 102, direct the processor to perform the remote rendering and printing on behalf of the client device 102. After obtaining the print capabilities 112, the remote printing service 106 may utilize the print capabilities 112 when rendering a print job for the printing device 104. For example, the remote printing service 106 may determine the appropriate print driver for the printing device based on the print capabilities 112 and render the print job using the determined print driver. If the print driver cannot be located within the remote printing service 106, the remote printing service 106 may access the Internet (e.g., via a web server) to locate and retrieve the appropriate print driver to render the print job.

The client device 102 of the printing system 100 includes any device operable to communicate with the printing device 104 and the remote printing service 106. The client device 102 may include any number of devices, such as personal digital assistants (PDAs), mobile and/or network enabled telephones (e.g., "smart phones"), portable computers, desktop computers, and the like. The client device 102 also includes a display 118 to provide a user an interface for, among other things, displaying various print options of the printing device 104 prior to printing. The client device 102 is coupled with the printing device 104 through a first network 108 and the network connections 130 and 132.

The printing device 104 of the printing system 100 includes any device operable to print a print job (e.g., a printer, a network enabled copier, a multifunction device, etc.). The print capabilities 112 may be configured within a memory 110 of the printing device 104. The print capabilities 112 may include a variety of print configuration parameters for the printing device 104, such as the printer type and number of sheets of paper available for printing, paper trays of the printing device 104, various finishing options for a print job (e.g., duplex printing, stapling, sorting, etc.). The print capabilities 112 may also include information about the printing device 104, such as an amount of memory available for processing a print job within the printing device 104, an amount and type of toner or color cartridges available for printing the print job, resolutions available for printing the print job, a model name, an Institute of Electrical and Electronic Engineer ID (IEEE-ID), and the types of page description languages (PDLs) supported by the printing device 104. The printing device 104 also includes a print engine 114. The print engine 114 comprises any device operable to transfer print data to a printable medium, such as a thermal printing head, a laser print engine, and an ink ejection droplet system.

The remote printing service 106 of the printing system 100 includes any device operable to receive document data from the client device 102 and render the document data into a print job for printing on the printing device 104. The remote printing service 106 is communicatively coupled to the second network 122 through a network connection 142. The remote printing service 106 may include a computer operating a web application service (WAS) for web based printing. The remote printing service 106 may reside within the Internet, accessible using a public Internet Protocol (IP) address. The remote printing service 106 additionally includes a rendering engine 126. The rendering engine 126 processes document data and print options to generate a print job for the printing device 104.

The client device 102 operates as an intermediary print job handler for the remote printing service 106. For example, the remote printing service 106 may transmit rendered print jobs to the client device 102. The client device 102 then forwards the print jobs to the printing device 104 for printing. As discussed above, a user of the client device 102 may wish to print document data on the printing device 104 using the remote printing service 106 due to the lack of rendering capabilities within the client device 102. The client device 102 may also wish to preview print data for the document data on the display 118 of the client device 102. In either case, the client device 102 may utilize the remote printing service 106 for this functionality.

When the remote printing service 106 renders the document data for the client device 102 into a print job, the print capabilities 112 are also utilized. For example, a user of the client device 102 may wish to include various print job options (e.g., a selected set of the print capabilities 112) for the print job, such as stapling, duplexing, sorting, the type of paper used, or other options based on specific the print capabilities 112 of the printing device 104. Such may be provided by the print capabilities 112.

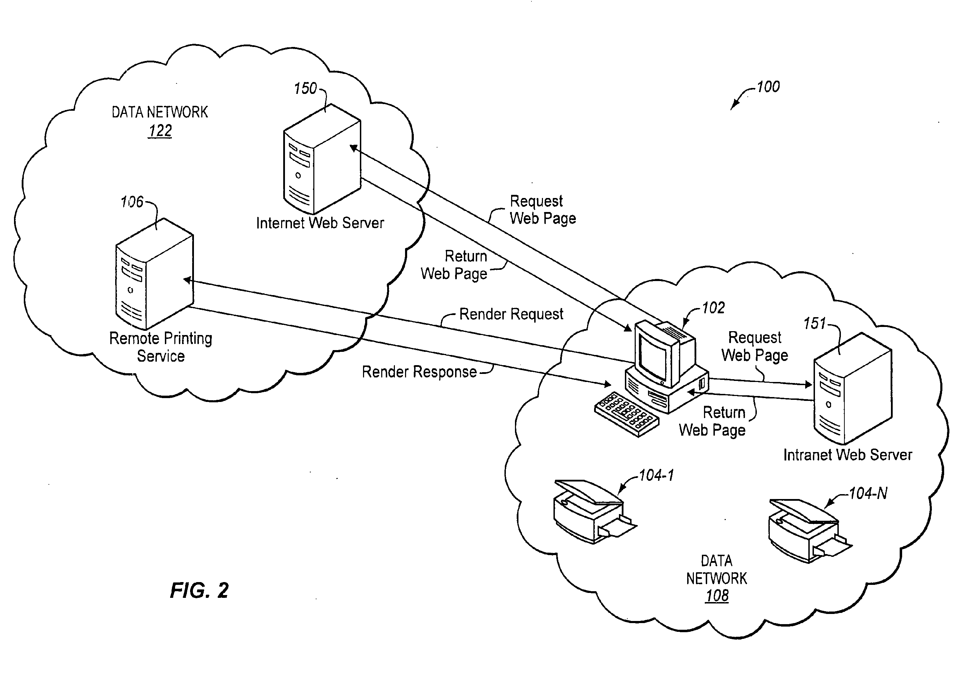

FIG. 2 is a block diagram of the exemplary printing system 100 configured for providing remote rendering capabilities to the client device 102 for web content that is inaccessible to a remote rendering service via the Internet. In this embodiment, the printing system 100 is configured with a plurality of printing devices 104-1...N within a data network 108, where N is an integer greater than 1. The data network 108 may be configured with a web server 151 that provides web content to the client device 102. The data network 108 is not accessible to users outside the network (e.g., an Intranet). In this regard, the printing devices 104-1...N are also not available to users outside the network.

In the network 108, the client device 102 may issue a request for a webpage from the web server 151 through, for example, an Internet browser. Since the client device 102 may be a mobile device configured with limited capabilities (e.g., limited or nonexistent print capabilities), the client device 102 may render the downloaded web content for printing via the remote printing service 106 in the data network 122. Examples of Internet browsers that may be used within the client device 102 include mobile versions of Safari, Firefox, Internet Explorer, Chrome, and the like.

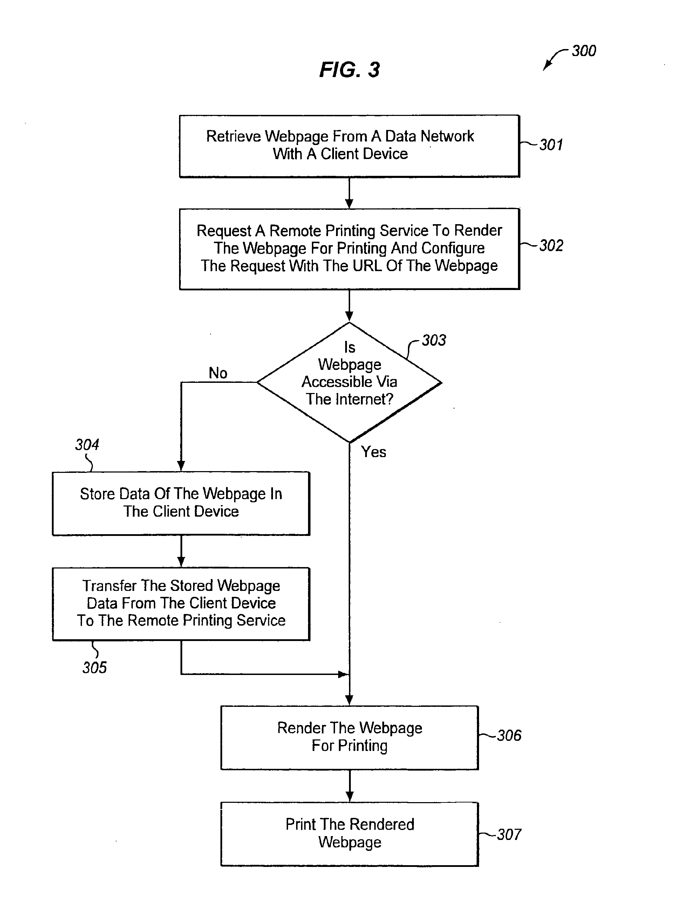

Also shown in this embodiment is a web server 150 configured within the data network 122. The web server 150 is operable to provide Internet data (e.g., websites) to the client device 102. In this regard, the client device 102 may transfer a request for a webpage to the web server 150. In response, the web server 150 may return the webpage to the client device 102 for display to the user via the display 118. Since this webpage data is generally accessible to the remote printing service 106, the client device 102 may simply send the uniform resource locator (URL) of the webpage to the remote printing service 106 for rendering when printing is desired. It should be noted, however, the invention is not intended to be limited to a single web server 150 as many web servers may be accessed via the Internet (i.e., the data network 122). The operational details of rendering Internet inaccessible web content are now shown and described with respect to FIG. 3.

FIG. 3 is a flow chart illustrating the process 300 of providing remote rendering capabilities to the client device 102 for printing Internet inaccessible web content (e.g., intranet webpages, other secure websites, redirected URLs) via the remote printing service 106. The process 300 generally initiates when a user of the client device 102 desires to print a webpage viewed within an Internet browser of the client device 102. In this regard, the client device 102 may send a request to the web server 151 to retrieve a webpage using an Internet browser, in the process element 301. In doing so, the client device 102 may transfer a request for the webpage from the web server 151. The web server, in turn, transfers a webpage to the client device 102 for viewing with the display 118 (e.g., via an Internet browser). To print the webpage content, the client device 102 may transfer request to the remote printing service 106 for remote printing of the webpage, in the process element 302. The request for remote printing may include the URL of the webpage such that the remote printing service 106 may access the webpage.

Since the web server 151 is an intranet web server, the web content available to the data network 108 may not be available to other networks, such as the data network 122. Thus, the rendering services of the remote printing service 106 may not be available to the client device 102 when printing of web content obtained through the web server 151 is desired. Accordingly, the remote printing service 106 may determine whether the page is accessible via the Internet, in the process element 303. For example, the remote printing service 106 may attempt to load the URL of the webpage and subsequently receive a network error stating that the webpage is not accessible. If the webpage is not accessible, the remote printing service 106 may return the error to the client device 102 stating such. In this regard, the client device 102 may store data of the webpage in the process element 304. For example, the client device 102 may automatically store the webpage data within computer memory of the client device 102. Once stored, the client device 102 may transfer the stored webpage data to the remote printing service 106 to provide remote rendering and printing services to the client device 102, in the process element 305. That is, the remote printing service 106 may render the stored webpage data using the print driver of the desired printing device 104, in the process element 306, and transfer the rendered webpage data to the desired printing device 104. In doing so, the client device 102 may also preview the rendered webpage within the display 118. For example, the remote printing service 106 may transfer the rendered webpage data to the client device 102 such that the client device 102 may act as an intermediary prior to printing on the desired printing device 104. If printing of the webpage content is still desired, the client device 102 may transfer the rendered webpage data to one or more of the printing devices 104-1...N within the data network 108 and print the rendered webpage in the process element 307.

If, however, the webpage is accessible via the Internet, the remote printing service 106 may render the webpage for printing, in the process element 306. That is, the remote printing service 106 may use the URL of the rendering request from the client device 102 to access the webpage and render it according to the print driver of the selected printing device 104. Thereafter, the remote printing service 106 may transfer the rendered webpage data to the desired printing device 104 via the client device 104 in the process element 307 for printing. Again, the remote printing service 106 may transfer the rendered webpage data to the client device 102 for preview prior to printing.

In one embodiment, the client device 102 may simply treat all retrieved webpage data as inaccessible to the remote rendering provided by the remote printing service 106. In this regard, the client device 102 may store all webpages where printing is desired. The client device 102 may then transfer the stored webpage data to the remote printing service 106 for rendering. In one embodiment, the client device 102 bundles each of the stored webpages into a single file (e.g., .zip, .tar, etc.) for transfer to the remote printing service 106. Once received, the remote printing service 106 may extract the webpages from the bundled file and render each of those webpages according to the print driver of the selected printer 104.

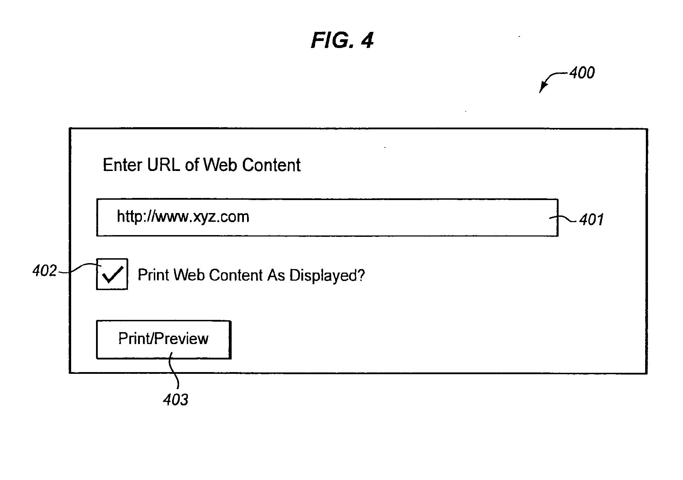

FIG. 4 is a block diagram of an exemplary graphical user interface 400 for implementing the remote rendering of Internet inaccessible web content. The graphical user interface 400 may be provided by the print module 116. For example, the print module 116 may include software instructions that direct a processor of the client device 102 to present the graphical user interface 400 to a user via the display 118 of the client device 102. In this regard, the print module 116 may display the graphical user interface 400 to the user so that the user may configure printing of web content within the printing system 100. For example, when the client device 102 retrieves a webpage from the server 151 and printing is desired, the URL of the webpage may be entered into the field 401 to configure a request for printing via the remote printing service 106. Should the URL of the webpage be inaccessible to the remote printing service 106, the client device 102 may be automatically configured to save the webpage data to memory and transfer the webpage data to the remote printing service 106 for rendering.

The graphical user interface 400 may also include a configuration field 402 requesting that the webpage be rendered as it is being displayed through the client device 102. To provide reassurance of such, the graphical user interface 400 might be also configured with a print preview button 403. For example, after the remote printing service 106 renders the webpage for printing, the remote printing service 106 may transfer the rendered webpage to the client device 102 as requested with the selection of the print preview button 403. Once received, the client device 104 may display the rendered webpage through the display 118 as it is to be printed on the printing device 104.

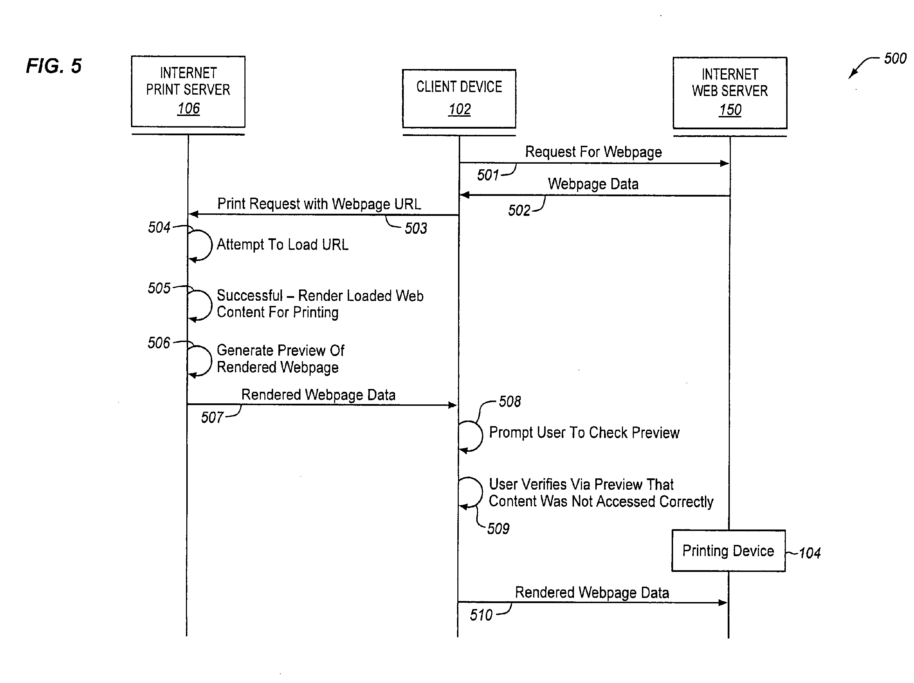

FIG. 5 is an exemplary communication processing flow 500 for rendering Internet accessible web content. In this embodiment, the client device 102 transfers a request for a webpage 501 to the Internet web server 150. The Internet web server 150 retrieves webpage data 502 and transfers it to the client device 102. The client device 102, upon viewing the webpage, may desire to print the webpage via the remote printing system 100. The client device 102 may, therefore, send a print request 503 that includes the webpage URL to the remote printing service 106. The remote printing service 106 may attempt to load the URL 504. As the webpage is Internet accessible, the remote printing service 106 may successfully load the webpage and render it for printing (505). The remote printing service 106 may then generate a preview of the rendered webpage (506) and transfer the rendered webpage data 507 to the client device 102. In alternative scenario, the remote printing service 106 may attempt to load the same URL as the client device 102. The remote printing service may be redirected, essentially making the same web content being displayed by the client device 102 inaccessible to the remote printing service. The preview of the rendered webpage overcomes such obstacles as the client device 102 may store or stream the web content to the remote printing service in response to previewing inconsistent web content. That is, if the web content appears different from the user of the client device 102 had intended due to some redirect of the URL, the user may treat the preview data as being Internet inaccessible and transfer the web content to the remote printing service accordingly for rendering thereof.

Once received by the client device 102, the client device 102 may prompt a user to preview the rendered webpage data (508) to determine whether printing is still desired. For example, the user may verify that the content was not accessed correctly (509) and decided that printing of the webpage data is not desired. If printing is still desired (e.g., because the content was accessed correctly), the user of the client device 102 may print the webpage data via the print/preview button 403 of the graphical user interface 404. If not, however, the client device 102 may return to request (501) another webpage from the Internet web server 150. Otherwise, the client device 102 transfers the rendered webpage data 510 to a printing device 104 for printing.

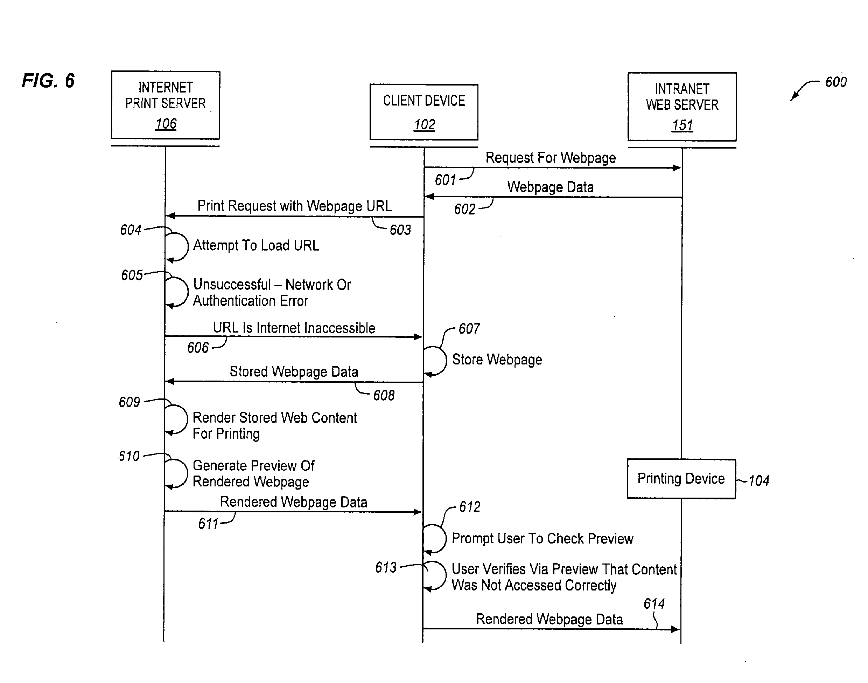

FIG. 6 is an exemplary communication processing flow 600 for rendering Internet inaccessible web content. That is, webpage data retrieved from the intranet web server 151 may not be available to the remote printing service 106. Accordingly, the communication processing flow 600 represents how the client device 102 handles webpage data that is inaccessible by the remote printing service 106. In doing so, the client device 102 may transfer a request for a webpage 601 to the web server 151. The web server 151 returns webpage data 602 to the client device 102. A user of the client device 102 may desire to print the webpage data 602. In this regard, the client device 102 issues a print request to print the webpage data including the URL of the webpage 603. As the URL is inaccessible to the remote printing service 106 via the Internet, the remote printing service 106 will run unsuccessfully load (604) and generate a network and/or authentication error 605. In turn, the remote printing service 106 may transfer a message 606 to the client device 102 indicating that the URL is Internet accessible. Once this message is received, the client device 102 stores (607) the webpage data (e.g., in computer memory, memory cards, hard disk, etc.) and transfers the stored webpage data 608 to the remote printing service 106 for rendering. The remote printing service 106 then renders the stored web content for printing (609) and generates a preview of the rendered webpage (610). Thereafter, the remote printing service 106 transfers the rendered webpage data 611 to the client device 102 where it may be previewed prior to printing. The print module 116 may then prompt the user to preview the rendered webpage (612). In doing so, the user of the client device 102 may determine that the content was not accessed correctly (613) and, therefore, not desire printing. If printing is still desired (e.g., because the content was accessed correctly), the client device 102 transfers the rendered webpage data 614 to the printing device 104. As with the communication processing flow 500 of FIG. 5, the user of the client device 102 may determine that printing is no longer desired and return to request 601 another webpage from the Internet web server 151.

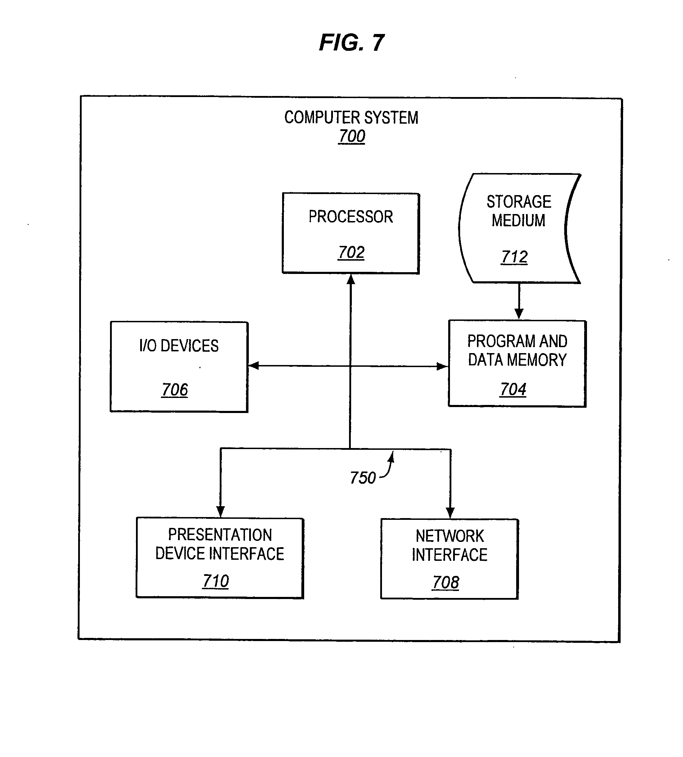

Embodiments of the invention can take the form of an entirely hardware embodiment, an entirely software embodiment, or an embodiment containing both hardware and software elements. In one embodiment, the invention is implemented in software, which includes but is not limited to firmware, resident software, microcode, etc. FIG. 7 is a block diagram depicting a computer system 700 operable to provide features and aspects hereof by executing programmed instructions and accessing data stored on a computer readable storage medium 712.

Furthermore, embodiments of the invention can take the form of a computer program product accessible from the computer-readable storage medium 712 providing program code for use by the computer system 700. For the purposes of this description, a computer readable medium can be any apparatus that can contain, store, communicate, or transport the program for use by the computer system 700.

The medium can be an electronic, magnetic, optical, electromagnetic, infrared, or semiconductor device. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk - read only memory (CD-ROM), compact disk - read/write (CD-R/W), and DVD.

The computer system 700, being suitable for storing and/or executing program code, includes at least one processor 702 coupled to memory elements 704 through a system bus 750. The memory elements 704 can include local memory employed during actual execution of the program code, bulk storage, and cache memories which provide temporary storage of at least some program code and/or data in order to reduce the number of times code and/or data must be retrieved from bulk storage during execution.

Input/output or I/O devices 706 (including but not limited to keyboards, displays, pointing devices, etc) can be coupled to the system either directly or through intervening I/O controllers. Network adapter interfaces 708 may also be coupled to the system to enable the computer system 700 to couple to other data processing systems or storage devices through intervening private or public networks. Modems, cable modems, IBM Channel attachments, SCSI, Fibre Channel, and Ethernet cards are just a few of the currently available types of network or host interface adapters. The presentation device interface 710 may be coupled to the system to interface to one or more presentation devices, such as printing systems and displays for presentation of presentation data generated by the processor 702.

Although specific embodiments have been described herein, the scope of the invention is not limited to those specific embodiments. Accordingly, the scope of the invention is only defined by the following claims and any equivalents thereof.

## Claims

1. A method of printing a webpage with a remote printing service, wherein the webpage is not Internet accessible to the remote printing service, the method comprising:
retrieving the webpage from a data network with a client device;
transferring a request from the client device to the remote printing service to render the webpage for printing;
receiving a response from the remote printing service indicating that the webpage is inaccessible;
storing data of the webpage in the client device; and
transferring the stored webpage data from the client device to the remote printing service for rendering and printing.

2. The method of claim 1, further comprising:
retrieving another webpage from the Internet;
storing data of the other webpage in the client device; and
compressing the stored data of the webpages into a single file.

3. The method of claim 1 or 2, further comprising:
receiving a rendered webpage from the remote printing service; and
previewing the rendered webpage with the client device.

4. The method of claim 1, 2 or 3, further comprising
retrieving another webpage from the Internet with a client device, wherein the other webpage is Internet accessible to the remote printing service;
transferring a request from the client device to the remote printing service to render the other webpage for printing, wherein the request comprises a uniform resource locator (URL) of the webpage.

5. The method of claim 4, further comprising:
receiving the other rendered webpage; and
previewing the other rendered webpage with the client device.

6. The method of any one preceding claim, further comprising configuring the client device to automatically store data of all webpages intended for printing via the remote printing service and transfer the stored webpage data to the remote printing service for rendering and printing.

7. The method of any one preceding claim, further comprising determining a print driver to render the webpage data responsive to the request to render the webpage for printing.

8. The method of claim 7, further comprising locating the print driver through the Internet when the print driver is not available to the remote printing service.

9. A remote printing system, comprising:
a plurality of printing devices operable within a first data network;
a remote printing service operable within a second data network to render print jobs for the printing devices, wherein the printing devices are inaccessible via the second network; and
a print module configured with a client device, wherein the print module is operable to prepare a webpage for rendering via the remote printing service, wherein the print module is further operable to transfer a request from the client device to the remote printing service to render the webpage for printing, receive a response from the remote printing service indicating that the webpage is inaccessible via the Internet, store data of the webpage in the client device, and transfer the stored webpage data from the client device to the remote printing service for rendering.

10. The remote printing system of claim 9, wherein the print module is further operable to:
store data of another webpage in the client device; and
compress the stored data of the webpages into a single file.

11. The remote printing system of claim 9, or 10, wherein the print module is further operable to:
receive a rendered webpage from the remote printing service; and
display a preview of the rendered webpage with the client device.

12. The remote printing system of claim 9,10, or 11, wherein the print module is further operable to transfer a request from the client device to the remote printing service to render the other webpage for printing, wherein the other webpage is Internet accessible to the remote printing service and the request comprises a uniform resource locator (URL) of the webpage.

13. The remote printing system of any one of claims 9 to 12, wherein the print module is further operable to automatically store data of all webpages intended for printing and transfer the stored webpage data to the remote printing service for rendering.

14. The remote printing system of any one of claims 9 to 13, wherein the remote printing service is further operable to determine a print driver to render the webpage data responsive to the request to render the webpage for printing.

15. The remote printing system of claim 14, wherein the remote printing service is further operable to locate the print driver through the Internet when the print driver is not available to the remote printing service.
